# EUROPÄISCHE PATENTANMELDUNG

(11) **EP 1 662 419 A1**
(43) Veröffentlichungstag der Anmeldung: **31.05.2006**
(21) Anmeldenummer: 05111241.5
(22) Anmeldetag: 24.11.2005
(51) Int. Cl.: G06F 21/02, G06F 12/14

(54) **Manipulationsgeschütztes Mikrocontrollersystem**

(30) Priorität: 26.11.2004 DE 102004057259
(71) Anmelder: ROBERT BOSCH GMBH, 70442 Stuttgart (DE)
(72) Erfinder: Ceskutti, Holger, 74219 Moeckmuehl (DE)

(57) **Zusammenfassung**

Ein Mikrocontrollersystem umfasst eine Prozessoreinheit (1), eine Quelle (2; 19) für vertrauliche Daten sowie einen Bus (8, 15), der Prozessoreinheit (1) und Quelle (2) verbindet. Zusammen mit der Quelle (2) ist eine Zugriffskontrolleinheit (3) auf einem gleichen Substrat (6) integriert, die anhand von auf dem Bus (8, 15) übertragenen Signalen entscheidet, ob eine Ausgabe von vertraulichen Daten aus der Quelle (2) zugelassen oder gesperrt wird.

## Beschreibung

### Stand der Technik

Die vorliegende Erfindung betrifft ein Mikrocontrollersystem mit einer Prozessoreinheit, einer Quelle für vertrauliche Daten sowie einem Adress- und Datenbus, der Prozessoreinheit und Quelle verbindet. Wenn sich bei einem solchen Mikrocontrollersystem ein unbefugter Eindringling Zugang zu dem Bus verschaffen kann, besteht die Möglichkeit, dass er die vertraulichen Daten aus der Quelle, meist einem Speicherbaustein, in Erfahrung bringt, diese Daten verändert und die Quelle austauscht oder so manipuliert, dass sie die veränderten Daten anstelle der ursprünglichen vertraulichen Daten liefert, um das Mikrocontrollersystem so dazu zu bringen, dass es eine von ihm gewollte Funktion ausführt.

Wenn ein solches Mikrocontrollersystem zur Steuerung einer Maschine wie etwa des Verbrennungsmotors eines Kraftfahrzeuges eingesetzt wird, besteht die Gefahr, dass die Betriebssicherheit und/oder die Lebensdauer einer solchen Maschine beeinträchtigt wird.

Gerade bei den Motorsteuergeräten für Kraftfahrzeuge ist das Interesse von Unbefugten, solche Manipulationen vorzunehmen, sehr groß, weil sie es beispielsweise ermöglichen, die verfügbare Leistung des Verbrennungsmotors zu erhöhen. Folge solcher Manipulationen kann sein, dass langfristig der so gesteuerte Motor Schaden nimmt, dass gesetzliche Vorschriften über den Schadstoffgehalt der Abgase des Motors nicht mehr eingehalten werden, oder dass das Fahrzeug Geschwindigkeiten erreicht, für die sein Fahrwerk nicht ausgelegt ist und bei denen es nicht mehr sicher beherrschbar ist. Es besteht daher erheblicher Bedarf nach Techniken, die es Unbefugten unmöglich machen, die Betriebsdaten eines Mikrocontrollersystem wie etwa eines Motorsteuergerätes zu manipulieren, oder die eine solche Manipulation doch zumindest so beschwerlich und arbeitsaufwändig machen, dass sie für einen Unbefugten wirtschaftlich nicht mehr interessant ist.

So ist es z.B. bekannt, von in einem Festwertspeicher gespeicherten Betriebsdaten eines solchen Mikrocontrollersystems wie etwa von Kennkurven für die Motorsteuerung einen Integritätsprüfwert zu berechnen, d.h. einen Datenwert, der sich mit jeder Änderung in einem einzelnen Speicherplatz der Betriebsdaten ändert, und diesen zusammen mit den Betriebsdaten in dem Festwertspeicher abzulegen. Eine Manipulation der Betriebsdaten führt dann mit hoher Wahrscheinlichkeit dazu, dass ein bei einem Systemstart von der Prozessoreinheit berechneter Integritätsprüfwert nicht mit dem in dem Festwertspeicher gespeicherten Wert übereinstimmt, so dass die Prozessoreinheit in der Lage ist, die Manipulation zu erkennen und den Betrieb zu verweigern. Sofern allerdings ein Unbefugter die Vorschrift kennt, nach der der Integritätsprüfwert berechnet wird, ist er in der Lage, passend zu manipulierten Betriebsdaten auch einen geänderten Integritätsprüfwert in den Festwertspeicher zu schreiben, so dass die Manipulation nicht mehr erkannt werden kann.

Eine andere Möglichkeit ist, das Programm selbst, das die Prozessoreinheit zum Durchführen der Integritätsprüfung verwendet, so abzuändern, dass es nicht mehr in der Lage ist, eine Abänderung der Betriebsdaten zu erkennen. Dies kann bekanntermaßen einem Unbefugten erschwert werden, indem das Betriebsprogramm oder zumindest wesentliche Teile von ihm in einem Speicher des Mikrocontrollersystems in verschlüsselter Form abgelegt und nur unmittelbar zu ihrer Ausführung entschlüsselt und in einem flüchtigen Speicher abgelegt werden. Auch dieser Schutz verliert seine Wirksamkeit, wenn der Unbefugte den Verschlüsselungsalgorithmus und ggf. einen dafür verwendeten Schlüssel kennt. Da beides aber dauerhaft in dem Mikroprozessorsystem gespeichert sein muss, hat ein Unbefugter im Prinzip beliebig viel Zeit zur Verfügung, um nach dem Verschlüsselungsalgorithmus und ggf. seinem Schlüssel zu suchen und zu versuchen, die Verschlüsselung zu knacken.

### Vorteile der Erfindung

Durch die vorliegende Erfindung wird ein Mikrocontrollersystem geschaffen, das einem Unbefugten den Zugriff auf in ihm enthaltene vertrauliche Daten erheblich erschwert. Zu diesem Zweck wird zusammen mit der Quelle für die vertraulichen Daten eine Zugriffskontrolleinheit auf einem gleichen Substrat integriert, die in der Lage ist, die Ausgabe von Daten aus der Quelle zu sperren, und die anhand von auf dem Bus übertragener Signale entscheidet, ob eine Ausgabe von vertraulichen Daten aus der Quelle zugelassen oder gesperrt wird.

Es gibt unterschiedliche Ansätze, wie anhand der auf den Bus übertragenen Signale der Angriff eines Unbefugten erkannt werden kann. Eine Möglichkeit ist, dass die Zugriffskontrolleinheit eingerichtet ist, eine von der Prozessoreinheit adressierte Startadresse einer Programmroutine zu erkennen und die Ausgabe aus der Quelle zu sperren, wenn die Startadresse außerhalb eines vorgegebenen, zulässigen Bereichs liegt. Dieser Bereich wird im allgemeinen ein Adressbereich sein, dessen Inhalt als vergleichsweise gut gegen unbefugte Manipulierung gesichert angesehen werden kann, insbesondere der Adressbereich eines Speichers, der mit der Prozessoreinheit auf einem gemeinsamen Substrat integriert ist. Wenn die Prozessoreinheit beim Start einer Routine, etwa beim Booten oder veranlasst durch einen Interrupt, auf eine Adresse in diesem Bereich zugreift, kann davon ausgegangen werden, dass hier ein nicht manipuliertes Bootprogramm gespeichert ist, und dass daher dem Mikrocontroller Zugriff auf die vertraulichen Daten gewährt werden kann, da er von ihnen nur den vorgesehenen Gebrauch machen wird. Startet die Prozessoreinheit jedoch mit einer Adresse außerhalb des vorgegebenen Bereichs, so ist davon auszugehen, dass ein manipuliertes Programm verwendet wird, und der Zugriff auf die vertraulichen Daten wird verweigert.

Eine Definition des zulässigen Bereichs sollte in der Zugriffskontrolleinheit fest abgelegt sein, sei es durch unmittelbare Speicherung der Grenzadressen dieses Bereichs oder eine beliebige Verarbeitungsvorschrift, die es der Zugriffskontrolleinheit erlaubt, zu entscheiden, ob eine über den Adressbus empfangene Adresse im zulässigen Bereich liegt oder nicht.

Eine besondere Manipulationsgefahr besteht bei Mikrocontrollersystemen, bei denen die Prozessoreinheit eingerichtet ist, sich in der Kontrolle über den Bus mit wenigstens einer anderen Einheit, z.B. einem Coprozessor, einem DMA-Controller oder dgl. abzuwechseln. Eine solche andere Einheit könnte jeweils auch ein Mikroprozessor sein, den ein Unbefugter an das Mikrocontrollersystem anschließt, um dessen Speicherinhalte auszukundschaften. Generell besteht jedoch bei einem solchen Mikrocontrollersystem die Notwendigkeit, dass die Prozessoreinheit und die andere Einheit miteinander kommunizieren, um festzulegen, welche Einheit wann die Kontrolle über den Bus hat, so dass die Zugriffskontrolleinheit dies durch Abhören von auf dem Bus ausgetauschten Signalen feststellen und die Ausgabe aus der Quelle sperren kann, wenn die Prozessoreinheit die Kontrolle über den Bus an die andere Einheit abgibt.

Ein Risikopotenzial besteht auch bei Systemen mit einer Debugger-Schnittstelle, die im allgemeinen dazu dient, einem externen Host-Rechner Einblick in die von der Prozessoreinheit ausgeführten Prozesse, ihre Registerinhalte etc. zu gewähren, um so Fehler im Betriebsprogramm der Prozessoreinheit erkennen und ausmerzen zu können, oder um technische Störungen von an das Mikrocontrollersystem angeschlossenen Peripheriegeräten diagnostizieren zu können. Indem die Zugriffskontrolleinheit die Ausgabe aus der Quelle sperrt, wenn die Prozessoreinheit über die Debugger-Schnittstelle kommuniziert, wird verhindert, dass über diese vertrauliche Daten der Quelle unkontrolliert abgefragt werden können. Im Falle eines befugten Zugriffs über die Debugger-Schnittstelle greift diese Sperre zwar auch, doch ist dies nicht weiter problematisch, da bei einem Befugten vorausgesetzt werden kann, dass er die vertraulichen Daten bereits kennt und sie nicht erst aus der Quelle lesen muss.

Um es einem Unbefugten zu erschweren, die Kopplung zwischen Kommunikation über die Debugger-Schnittstelle und Sperrung des Zugriffs auf die vertraulichen Daten aufzuheben, sind die Debugger-Schnittstelle und die Zugriffskontrolleinheit vorzugsweise auf einem gemeinsamen Substrat integriert.

Eine weitere Möglichkeit des Zugriffsschutzes, die mit den oben genannten auch kombinierbar ist, ist, dass die Zugriffskontrolleinheit einen Sensor zum Erfassen einer Eigenschaft der Umgebung der Quelle umfasst und eingerichtet ist, die Ausgabe der vertraulichen Daten aus der Quelle zu sperren, wenn die vom Sensor erfasste Eigenschaft einen unzulässigen Wert hat.

Es kommen verschiedene Umgebungseigenschaften zur Erfassung durch den Sensor in Frage. So kann der Sensor insbesondere ein Sensor zum Unterscheiden zwischen dem offenen und dem geschlossenen Zustand eines Gehäuses der Quelle, ein Temperatursensor, ein Betriebsspannungssensor oder ein Taktfrequenzsensor zum Erfassen des Arbeitstaktes des Mikrocontrollersystems sein. Die Erfassung eines offenen Gehäuses ist offensichtlich ein Hinweis darauf, dass sich ein Unbefugter an dem Mikrocontrollersystem zu schaffen macht. Bekanntlich können aber auch Temperaturen des Mikrocontrollersystems außerhalb eines spezifizierten Betriebstemperaturbereichs zu einzelnen Fehlfunktionen des Systems führen, die Unbefugte zu nutzen versuchen, um die vertraulichen Daten in Erfahrung zu bringen. Auch durch Anlegen von Betriebsspannungen außerhalb eines spezifizierten Bereichs, sei es dauerhaft oder in Form von kurzen Spannungsspitzen, oder durch gezieltes Verkürzen einzelner Taktzyklen lassen sich Fehlfunktionen induzieren, die zu diesem Zweck nutzbar sind. Dementsprechend können ein Temperatursensor, ein Betriebsspannungssensor oder ein Taktfrequenzsensor zum Erfassen eines Angriffs auf das System eingesetzt werden.

Wenn mit Hilfe eines solchen Sensors ein Angriff auf das System erfasst wird, kann vorgesehen werden, dass die Zugriffsüberwachungseinheit einen gesperrten Zugriff aufrecht erhält, bis das Mikrocontrollersystem abgeschaltet oder zurückgesetzt wird. Der nach jeder Erkennung eines Angriffs erforderliche Neustart des Mikrocontrollersystems verringert erheblich die Häufigkeit, mit der Angriffsversuche unternommen werden können.

Die Quelle kann einfach eine Speicherschaltung für die vertraulichen Daten umfassen.

Die Manipulationssicherheit eines solchen Systems kann ganz erheblich verbessert werden durch Mittel zum Löschen der vertraulichen Daten in dem Fall, dass die vom Sensor erfasste Eigenschaft einen unzulässigen Wert hat. Wenn die vertraulichen Daten durch diese Mittel gelöscht worden sind, kann das Mikrocontrollersystem nur dann wieder in Betrieb genommen werden, wenn die vertraulichen Daten von neuem in die Quelle eingetragen werden, was deren Kenntnis voraussetzt und dem Unbefugten nicht möglich ist.

Alternativ kann die Quelle eine Entschlüsselungsschaltung zum Entschlüsseln von verschlüsselten Daten und Ausgeben der entschlüsselten Daten als die vertraulichen Daten umfassen. Die verschlüsselten Daten müssen in einem solchen System nicht vertraulich gehandhabt werden, d. h. sie können in einem Speicher abgelegt sein, dessen Inhalt nicht besonders gegen das Auskundschaften geschützt ist. Auch hier können Mittel zum Löschen, allerdings für die für die Entschlüsselung benötigten Daten im Fall der Erfassung eines Angriffs, vorgesehen sein.

Weitere Merkmale und Vorteile der Erfindung ergeben sich aus der nachfolgenden Beschreibung von Ausführungsbeispielen unter Bezugnahme auf die beigefügten Figuren.

### Figuren

### Es zeigen:

- Fig. 1: ein Blockdiagramm eines Mikroprozessorsystem gemäß einer ersten Ausgestaltung der Erfindung;
- Fig. 2: ein Blockdiagramm eines Mikroprozessorsystems gemäß einer zweiten Ausgestaltung; und
- Fig. 3: ein Blockdiagramm gemäß einer dritten Ausgestaltung der Erfindung.

### Beschreibung der Ausführungsbeispiele

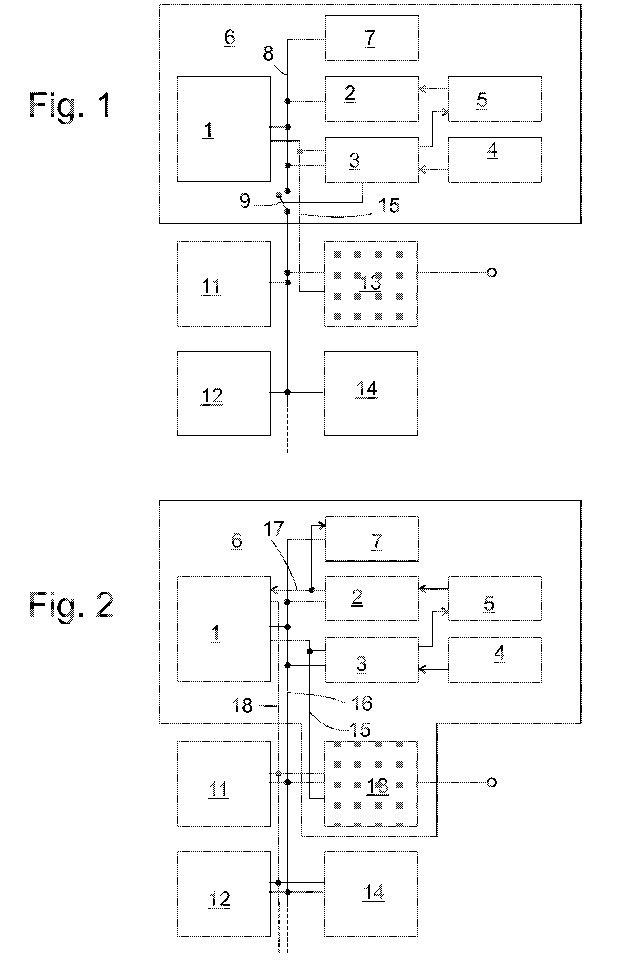

Das in Fig. 1 gezeigte Mikrocontrollersystem umfasst eine Prozessoreinheit 1, die zusammen mit einem löschbaren Festwertspeicher, im folgenden als internes ROM 2 bezeichnet, einer Zugriffskontrolleinheit 3, einem oder mehreren Sensoren 4 sowie fakultativ einem Löschsignalgenerator 5 auf einem gemeinsamen Halbleitersubstrat 6, symbolisiert durch ein die Komponenten 1 bis 5 umgebendes Rechteck, integriert sind. Die Prozessoreinheit besitzt eine Mehrzahl von in der Fig. nicht eigens dargestellten Registern zum Speichern von Zwischenergebnissen eines von ihr ausgeführten Programms; im Bedarfsfall kann ferner ein Speicher mit wahlfreiem Zugriff, im folgenden als internes RAM 7 bezeichnet, zum Speichern von Zwischenergebnissen auf dem Substrat 6 integriert sein.

Die Prozessoreinheit 1 kommuniziert mit dem internen ROM 2 und ggf. dem internen RAM 7 über einen internen Bus, dessen Adress- und Datenleitungen in der Fig. gemeinsam mit 8 bezeichnet sind. Die Adress- und Datenleitungen 8 des internen Busses sind über einen ebenfalls auf dem Substrat 6 angesiedelten Schalter 9 mit entsprechenden Leitungen 10 eines externen Busses verbindbar. Der Schalter 9 steht unter der Kontrolle der Zugriffskontrolleinheit 3.

An den externen Bus sind ein externes ROM 11, ein externes RAM 12, eine Debugger-Schnittstelle 13 sowie ein oder mehrere Peripheriegeräteschnittstellen 14 angeschlossen. Die Debugger-Schnittstelle 13 ermöglicht es einem nicht dargestellten externen Host, Inhalte der externen Speicher 11, 12 sowie über die Peripheriegeräteschnittstellen 14 Zustände bzw. Erfassungsergebnisse von angeschlossenen Peripheriegeräten abzufragen. Eine solche Debugger-Schnittstelle ist insbesondere erforderlich, wenn das Mikrocontrollersystem als Motorsteuergerät in einem Kraftfahrzeug eingesetzt werden soll, um mit Hilfe von über die Debugger-Schnittstelle 13 abgefragten Informationen Fehlfunktionen des Mikrocontrollersystems bzw. eines von ihm gesteuerten Gerätes diagnostizieren zu können.

Im Normalbetrieb entscheidet die Zugriffskontrolleinheit 3bei jedem Lesezugriff der Prozessoreinheit 1 , ob die abgefragte Adresse zu einem der internen Speicher 2, 7 oder einem der externen Speicher 11, 12 gehört und hält in ersterem Fall den Schalter 9 geöffnet, so dass aus den internen Speichern gelesene Daten nicht auf dem externen Bus abgreifbar sind.

Die Debugger-Schnittstelle 13 ist mit der Prozessoreinheit 1 über eine gesondert gezeichnete Steuerleitung 15 des Busses verbunden, die unterschiedliche Funktionen haben kann. Es kann sich z.B. um eine Interrupt- oder Reset-Leitung handeln, die es der Debugger-Schnittstelle 13 ermöglicht, eine Interrupt- oder Neustart-Routine der Prozessoreinheit auszulösen, in welcher diese von der Debugger-Schnittstelle 13 angeforderte Daten auf den externen Bus 10 gibt, so dass die Debugger-Schnittstelle 13 sie weitergeben kann. Die Zugriffskontrolleinheit 3, die sowohl an die Steuerleitung 15 als auch an die Leitungen 8 des internen Busses angeschlossen ist, empfängt ebenfalls das Interrupt-Signal der Debugger-Schnittstelle 13 und prüft, ob die Startadresse der Interrupt- oder Neustart-Routine, die kurz darauf auf den Adressleitungen des internen Busses erscheint, zum Adressbereich des internen ROM 2 gehört. Wenn ja, wird angenommen, dass die Interrupt- oder Neustart-Routine die ursprünglich vom Hersteller des Mikrocontrollersystem vorgesehene ist, da der Inhalt des internen ROM 2 aufgrund von dessen Integration auf dem Substrat 6 zusammen mit der Prozessoreinheit 1 für einen Unbefugten nur schwer manipulierbar ist. Liegt die Startadresse des Interrupt nicht im Adressbereich des internen ROM 2, öffnet die Zugriffskontrolleinheit 3 den Schalter 9 dauerhaft, so dass eine manipulierte Interrupt- oder Neustart-Routine zwar die Prozessoreinheit veranlassen kann, vertrauliche Daten aus den internen Speichern zu lesen, diese aber auch durch einen Schreibbefehl nicht auf den externen Bus ausgegeben werden können. Die Zugriffskontrolleinheit 3 schließt den Schalter erst wieder beim Ausschalten oder Zurücksetzen des Systems. Bei einem anschließenden Neustart wird wiederum geprüft, ob die Startadresse der Neustart-Routine im Adressbereich der internen Speicher 2, 7 liegt, und wenn nicht, wird der Schalter 9 umgehend wieder geöffnet.

Es kann sich bei der gesonderten Steuerleitung 15 auch um eine Leitung handeln, deren Zustand angibt, ob die Prozessoreinheit 1 oder irgendein anderer Systembaustein wie etwa die Debugger-Schnittstelle 13, ein Koprozessor oder ein DMA-Controller die Kontrolle über den Bus hat. Durch Ausgeben eines entsprechenden Signals auf der Leitung 15 kann die Debugger-Schnittstelle 13 die Kontrolle über den Bus an sich ziehen und so in kurzer Zeit umfangreiche Datenmengen aus dem externen RAM 12 oder den Peripheriegeräteschnittstellen 14 lesen, während die Prozessoreinheit 1 in einen Wartezustand verharrt. Auch hier erkennt die Zugriffskontrolleinheit 3, wann die Debugger-Schnittstelle 13 oder, sofern vorhanden, einer der anderen Bausteine die Busherrschaft an sich zieht, und öffnet dann den Schalter 9, so dass vertrauliche Daten aus den Registern der Prozessoreinheit 1, dem internen ROM 2 oder ggf. dem internen RAM 7 nicht abgefragt werden können.

Bei den vertraulichen Daten des internen ROM 2 kann es sich beispielsweise um einen geheimen Schlüssel handeln, der es zusammen mit einem im externen ROM 11 gespeicherten Entschlüsselungsalgorithmus der Prozessoreinheit 1 ermöglicht, Teile eines Betriebsprogramms, die in verschlüsselter Form im externen ROM 11 gespeichert sind, zu entschlüsseln und auszuführen. Zwischenergebnisse der Entschlüsselung werden, sofern die Register der Prozessoreinheit 1 nicht ausreichen, im internen RAM 7 gespeichert; das interne RAM 7 kann auch genutzt werden, um die entschlüsselten Programmanweisungen so lange gespeichert zu halten, wie das Mikrocontrollersystem in Betrieb ist, so dass diese nach jedem Systemstart jeweils nur einmal entschlüsselt werden müssen.

Bei dem Sensor 4 handelt es sich einer ersten Ausgestaltung zufolge um einen Lichtsensor wie etwa eine Fotodiode, die auf der Oberfläche des Halbleitersubstrats 6 unter einer lichtundurchlässigen Schicht angebracht ist. Wenn ein Unbefugter diese Schicht entfernt, um Aufschluss über die Struktur auf dem Halbleitersubstrat 6 zu gewinnen, fällt Licht auf den Sensor 4, und die Zugriffskontrolleinheit 3 empfängt vom Sensor 4 ein entsprechendes Signal. Wenn dies geschieht, gibt die Zugriffskontrolleinheit 3 einer ersten Variante zufolge auf der Steuerleitung 15 das bereits oben erwähnte, die Herrschaft eines anderen Bausteins als der Prozessoreinheit 1 über den Bus anzeigende Signal aus und öffnet den Schalter 9. Da die Prozessoreinheit 1 durch dieses Signal in den Wartezustand versetzt wird und nicht mehr auf den Bus zugreifen kann, kann sie keine vertraulichen Inhalte aus den internen Speichern 2, 7 mehr lesen, so dass diese auch nicht von dem möglicherweise freigelegten internen Bus abgetastet werden können. Dieser Zustand bleibt erhalten, bis das gesamte Mikrocontrollersystem ausgeschaltet wird.

Einer zweiten Variante zufolge, wenn der wie gesagt fakultative Löschsignalgenerator 5 vorhanden ist, steuert die Zugriffskontrolleinheit 3 bei Empfang des Lichteinfall anzeigenden Signals vom Sensor 4 den Löschsignalgenerator 5 an. Der Löschsignalgenerator 5 kann beispielsweise als ein Spannungswandler ausgeführt sein, der, wenn er von der Zugriffskontrolleinheit 3 angesteuert wird, eine an das Halbleitersubstrat 6 angelegte Betriebsspannung in eine höhere Spannung umsetzt, die zum elektrischen Beschreiben bzw. Löschen des internen ROM 2 ausreicht, und sie dem internen ROM 2 zuführt, um dessen Inhalt zu löschen. Ein über den Sensor 4 erfasster Angriff eines Unbefugten führt somit zur umgehenden Vernichtung der vertraulichen Daten im internen ROM 2; die Gefahr, dass diese Daten ausspioniert werden, ist damit vollends beseitigt.

Anstelle eines Lichtsensors können diverse andere Sensortypen als Sensor 4 eingesetzt werden, um den gleichen Erfolg zu erzielen, es können auch mehrere Sensoren 4 unterschiedlichen Typs in Kombination zum Einsatz kommen. Eine mögliche Alternative ist z.B. ein kapazitiver Sensor, der auf das Vorhandensein oder Nichtvorhandensein einer Metallisierungsschicht reagiert, welche die Strukturen auf dem Halbleitersubstrat überdeckt und elektromagnetisch nach außen abschirmt, und die ein Unbefugter entfernen muss, wenn er direkte Messungen an den auf dem Halbleitersubstrat 6 integrierten Schaltungen durchführen will. Brauchbar ist auch ein Temperatursensor, der anzeigt, ob die Temperatur des Halbleitersubstrats 6 außerhalb eines vorgegebenen zulässigen Betriebsbereichs liegt. Wenn dies der Fall ist, so ist dies ein Hinweis darauf, dass ein Unbefugter durch Überhitzen oder Unterkühlen versucht, Fehlfunktionen des Mikrocontrollersystems herbeizuführen, in deren Folge evtl. vertrauliche Daten auf dem Bus erscheinen und ausgelesen werden könnten. Dem gleichen Zweck kann ein Betriebsspannungssensor dienen, der anzeigt, ob die Versorgungsspannung des Halbleitersubstrats 6 außerhalb eines vorgegebenen zulässigen Bereichs liegt, oder ob sie Spannungsspitzen enthält, die die Funktion des Systems beeinträchtigen könnten. Des weiteren kommt ein Taktsensor in Betracht, der ein dem Substrat 6 von außen zugeführtes Taktsignal mit einem von ihm selbst intern erzeugten vergleicht und anhand von abrupten Änderungen des Phasenversatzes zwischen externem und internem Taktsignal von einem Unbefugten mutwillig verkürzte Takte, sog. Glitches, erkennt.

Die Ausgestaltung der Fig. 2 unterscheidet sich von der der Fig. 1 in zwei Aspekten. Einer davon ist der Aufbau des Bussystems. Ein einheitlicher Adressbus 16 verbindet die Prozessoreinheit sowohl mit den internen Speichern 2, 7 als auch mit den externen 11, 12, der Debugger-Schnittstelle 13 und den Peripheriegeräteschnittstellen 14. Der Datenbus hingegen ist aufgeteilt in einen internen Datenbus 17 zwischen der Prozessoreinheit 1 und den internen Speichern 2, 7 und einen externen Datenbus 18 zwischen der Prozessoreinheit 1 und den Komponenten 11, 12, 13, 14. Infolge der Trennung können vertrauliche Daten nicht direkt von einem internen Speicher 2 oder 7 auf den externen Datenbus 18 gelangen. Dies ermöglicht es der Prozessoreinheit, das in verschlüssselter Form im externen ROM 11 abgelegte Betriebsprogramm mit Hilfe eines im internen ROM 2 gespeicherten Algorithmus zu entschlüsseln, das entschlüsselte Programm im internen RAM 7 zu speichern und anschließend die Anweisungen des Programms über den internen Datenbus 17 zu lesen und auszuführen, ohne dass diese außerhalb des Substrats 6 mitverfolgt werden können.

Auch eine indirekte Ausgabe von vertraulichen Daten aus den internen Speichern 2, 7 auf den externen Bus durch eine Spionageroutine, die die Prozessoreinheit 1 veranlasst, vertrauliche Daten in ihre Register zu laden und anschließend auf den externen Datenbus 18 auszugeben, ist hier ausgeschlossen: Da das Betriebsprogramm im externen ROM 11 verschlüsselt ist, kann ein Unbefugter eine solche Routine nicht unverschlüsselt in das externe ROM 11 eintragen; er müsste erst den Verschlüsselungsalgorithmus und den Schlüssel herausfinden, woran er aber gerade dadurch gehindert ist, dass sich diese vertraulichen Informationen in den internen Speichern 2, 7 befinden.

Eine Möglichkeit, die Prozessoreinheit 1 dazu zu bringen, eine solche Spionageroutine auszuführen, ist, könnte noch darin bestehen, dass man eine Tabelle von Interrupt- und Reset-Adressen, auf die die Prozessoreinheit 1 zugreift, verändert und die Prozessoreinheit dann mit Hilfe eines Interrupt oder Reset veranlasst, eine Interrupt- oder Reset-Routine unmittelbar aus den externen ROM 11 zu lesen und auszuführen. Dies verhindert jedoch erfindungsgemäß wie beim Beispiel der Fig. 1 die Zugriffskontrolleinheit 3, indem sie bei jedem Reset oder Interrupt die Startadresse der entsprechenden Routine vom Adressbus 16 abliest und über die Steuerleitung 15 der Prozesssteuereinheit 1 die Busherrschaft entzieht, wenn die Startadresse nicht im Adressbereich des internen ROM 2 liegt. Eine unverschlüsselte Routine aus dem externen ROM 11 kann also nicht ausgeführt werden.

Eine weitere Abweichung zwischen dem Mikrocontrollersystem der Fig. 1 und dem der Fig. 2 liegt darin, dass in letzterem auch die Debugger-Schnittstelle 13 auf dem Halbleitersubstrat 6 integriert ist. Es ist daher für einen Unbefugten nur schwer möglich, die Kommunikation zwischen der Debugger-Schnittstelle 13 und den anderen auf dem Substrat 6 integrierten Komponenten zu beeinflussen.

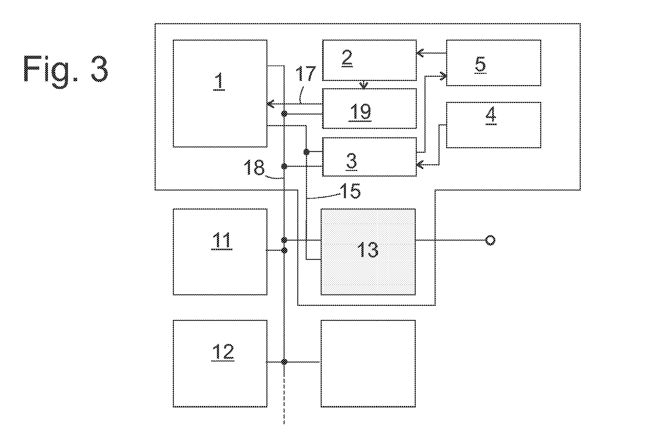

Die Ausgestaltung der Fig. 3 unterscheidet sich von den zuvor beschriebenen Mikrocontrollersystemen dadurch, dass die Entschlüsselung des Betriebsprogramms im externen ROM 11 nicht von der Prozessoreinheit 1 ausgeführt wird, sondern von einer schaltungsmäßig von der Prozessoreinheit 1 getrennten kryptographischen Einheit 19 auf dem Substrat 6. Die kryptographische Einheit 19 enthält speziell an den verwendeten Verschlüsselungsalgorithmus angepasste Schaltungen, die in der Lage sind, die Entschlüsselung des Betriebsprogramms für die Prozessoreinheit erheblich schneller durchzuführen als diese selbst es könnte, evtl. sogar mit der gleichen Geschwindigkeit, mit der die Prozessoreinheit 1 die Anweisungen des Betriebsprogramms ausführt. Das interne ROM 2 enthält den von der kryptographischen Einheit 19 zur Entschlüsselung des Betriebsprogramms verwendeten Schlüssel. Da es von der Prozessoreinheit nicht gelesen werden muss, ist es mit dem Bus des Mikrocontrollersystems nicht verbunden und kann daher weder von der Debugger-Schnittstelle 13 noch von der Prozessoreinheit 1 gelesen werden.

Das interne ROM 2 enthält ferner die Grenzen des Adressbereichs des externen RAM 12, in welchem das Betriebsprogramm der Prozessoreinheit 1 verschlüsselt gespeichert ist. Wenn die Prozessoreinheit 1 eine Adresse in diesem Speicherbereich adressiert, und der verschlüsselte Inhalt der betreffenden Speicheradresse auf dem externen Datenbus 18 erscheint, wird er von der kryptographischen Einheit 19 empfangen, entschlüsselt und der Prozessoreinheit 1 über den internen Datenbus 17 zur Verfügung gestellt. Adressen außerhalb des verschlüsselten Bereiches, etwa solche im externen RAM 12, adressiert und liest die Prozessoreinheit 1 direkt über den externen Datenbus 18.

Die mit dem Adressbus verbundene Zugriffskontrolleinheit 3 erfasst jeweils nach einem auf einer Steuerleitung des Busses übertragenen Reset- oder Interrupt-Signal die Startadresse der als Reaktion auf den Reset oder Interrupt von der Prozessoreinheit 1 angesprungenen Routine. Wenn sie erkennt, dass die Adresse außerhalb des verschlüsselten Bereichs des externen ROM 11 liegt, also Daten enthält, die von der Prozessoreinheit 1 ohne vorherige Entschlüsselung ausgewertet werden und die daher ein Unbefugter möglicherweise gezielt verändern könnte, entzieht sie der Prozessoreinheit 1 über die Steuerleitung 15 die Busherrschaft und blockiert so das System. Die kryptographische Einheit 19 empfängt somit keine zu entschlüsselnden Daten mehr und kann auch keine weiteren entschlüsselten Daten ausgeben.

## Patentansprüche

1. Mikrocontrollersystem mit einer Prozessoreinheit (1), einer Quelle (2; 19) für vertrauliche Daten sowie einem Bus (8, 15; 15-18), der Prozessoreinheit (1) und Quelle (2; 19) verbindet, **dadurch gekennzeichnet, dass** zusammen mit der Quelle (2; 19) eine Zugriffskontrolleinheit (3) auf einem gleichen Substrat (6) integriert ist, die anhand von auf dem Bus (8, 15; 15-18) übertragenen Signalen entscheidet, ob eine Ausgabe von vertraulichen Daten aus der Quelle (2; 19) zugelassen oder gesperrt wird.

2. Mikrocontrollersystem nach Anspruch 1, **dadurch gekennzeichnet, dass** die Zugriffskontrolleinheit (3) eingerichtet ist, eine von der Prozessoreinheit (1) gelesene Startadresse einer Routine zu erkennen und die Ausgabe aus der Quelle (2; 19) zu sperren, wenn die Startadresse außerhalb eines vorgegebenen zulässigen Bereichs liegt.

3. Mikrocontrollersystem nach Anspruch 2, **dadurch gekennzeichnet, dass** eine Definition des zulässigen Bereichs in der Zugriffskontrolleinheit (3) fest abgelegt ist.

4. Mikrocontrollersystem nach Anspruch 2 oder 3, **dadurch gekennzeichnet, dass** der zulässige Bereich im Adressbereich eines Speichers (2, 7) enthalten ist, der mit der Prozessoreinheit (1) auf einem gemeinsamen Substrat (6) integriert ist.

5. Mikrocontrollersystem nach einem der vorhergehenden Ansprüche, **dadurch gekennzeichnet, dass** die Prozessoreinheit (1) eingerichtet ist, sich in der Kontrolle über den Bus (8, 15; 15-18) mit wenigstens einer anderen Einheit (13) abzuwechseln, und dass die Zugriffskontrolleinheit (3) eingerichtet ist, die Ausgabe aus der Quelle (2; 19) zu sperren, wenn die Prozessoreinheit (1) die Kontrolle über den Bus (8, 15; 15-18) an die andere Einheit (13) abgibt.

6. Mikrocontrollersystem nach einem der vorhergehenden Ansprüche, **dadurch gekennzeichnet, dass** es eine Debugger-Schnittstelle (13) aufweist und dass die Zugriffskontrolleinheit (3) eingerichtet ist, die Ausgabe aus der Quelle (2; 19) zu sperren, wenn die Prozessoreinheit (1) über die Debugger-Schnittstelle (13) kommuniziert.

7. Mikrocontrollersystem nach Anspruch 6, **dadurch gekennzeichnet, dass** die Debugger-Schnittstelle (13) und die Zugriffskontrolleinheit (3) auf einem gemeinsamen Substrat (6) integriert sind.

8. Mikrocontrollersystem nach einem der vorhergehenden Ansprüche, **dadurch gekennzeichnet, dass** der Zugriffskontrolleinheit (3) ein Sensor (4) zum Erfassen einer Eigenschaft der Umgebung der Quelle (2; 19) zugeordnet ist und dass sie eingerichtet ist, die Ausgabe der vertraulichen Daten aus der Quelle (2; 19) zu sperren, wenn die vom Sensor (4) erfasste Eigenschaft einen unzulässigen Wert hat.

9. Mikrocontrollersystem nach Anspruch 8, **dadurch gekennzeichnet, dass** der Sensor (4) ein Sensor zum Unterscheiden zwischen dem offenen und dem geschlossenen Zustand eines Gehäuses der Quelle, ein Temperatursensor, ein Betriebsspannungssensor oder ein Taktfrequenzsensor zum Erfassen des Arbeitstaktes des Mikrocontrollersystems ist.

10. Mikrocontrollersystem nach einem der vorhergehenden Ansprüche, **dadurch gekennzeichnet, dass** die Zugriffsüberwachungseinheit (3) eine gesperrte Ausgabe bis zu einem Abschalten oder Zurücksetzen des Mikrocontrollersystem aufrecht erhält.

11. Mikrocontrollersystem nach einem der vorhergehenden Ansprüche, **dadurch gekennzeichnet, dass** die Quelle eine Speicherschaltung (2) für die vertraulichen Daten umfasst.

12. Mikrocontrollersystem nach den Ansprüchen 8 und 11, **dadurch gekennzeichnet, dass** sie über Mittel (5) zum Löschen der vertraulichen Daten in dem Fall verfügt, dass die vom Sensor (4) erfasste Eigenschaft einen unzulässigen Wert hat.

13. Mikrocontrollersystem nach einem der vorhergehenden Ansprüche, **dadurch gekennzeichnet, dass** die Quelle eine Entschlüsselungsschaltung (19) zum Entschlüsseln von verschlüsselten Daten und Ausgeben der entschlüsselten Daten als die vertraulichen Daten umfasst.

14. Mikrocontrollersystem nach den Ansprüchen 8 und 13, **dadurch gekennzeichnet, dass** sie über Mittel (5) zum Löschen von für die Entschlüsselung benötigten Daten in dem Fall verfügt, dass die vom Sensor (4) erfasste Eigenschaft einen unzulässigen Wert hat.

15. Mikrocontrollersystem nach einem der vorhergehenden Ansprüche, **dadurch gekennzeichnet, dass** es ein Steuergerät für ein Kraftfahrzeug ist.
